# EUROPEAN PATENT APPLICATION

(11) **EP 4 823 034 A1**
(43) Date of publication of application: **14.10.2026**
(21) Application number: 25169035.0
(22) Date of filing: 08.04.2025
(51) Int. Cl.: H04L 9/08, H04L 9/32

(54) **METHOD AND SYSTEM FOR MONITORING A DIGITAL SIGNATURE**

(71) Applicant: NXP B.V., 5656 AG Eindhoven (NL)
(72) Inventor: van Vredendaal, Christine, 5656AG Eindhoven (NL); Davies, Gareth Thomas, 5656AG Eindhoven (NL); Azouaoui, Melissa, 5656AG Eindhoven (NL)
(74) Representative: Colaiuda, Antonella

(57) **Abstract**

Described is a system, and method for monitoring a digital signature, comprising: generating keypairs *Kₛₜ,* each comprising an OTS public key and a seed-derived OTS private key, each associated with an index *st*; generating a binary tree, a root of which corresponds to a master public key and leaf-nodes of which to keypairs *Kₛₜ,* storing the seed, master public key and index *st* in a first processor and multiple nodes in a second processor, receiving a digital signature request; in response: downloading the seed, master public key, and index st, selecting the keypair *Kₛₜ* associated with the index *st,*
computing an authentication path for *Kₛₜ* using the multiple nodes, creating a digital signature comprising the authentication path, deleting at least one node belonging to the authentication path, replacing the index *st* with *st+1* in the first processor,
and verifying the validity of the digital signature.

## Description

### TECHNICAL FIELD

The present disclosure relates to a method for monitoring a digital signature algorithm (DSA) of a message. Without being limited thereto, it is of particular significance for detecting the re-use of a one-time signature key of a DSA. The disclosure further relates to a device for performing such a method.

### BACKGROUND

A digital signature is a mathematical algorithm which provides a way for a user (also known as signer) to sign messages or documents so that the signatures can later be verified from a third party (also known as verifier). Digital signatures are based on the concept of private key and public key: a signer may generate a keypair, comprising a private key and a public key. The public key may be made accessible, i.e. public. The private key is kept secret, i.e. not shared. The signer may then sign a message with a private key and then he may transmit the signed message with the corresponding public key to a verifier. The public key is used by the verifier to verify the authenticity of the private key.

With the introduction of quantum computers hash-based signature have been introduced: those signatures rely on the security of hash-functions and one-time signatures schemes.

### SUMMARY

Aspects of the disclosure are defined in the accompanying claims.

In a first aspect of the present disclosure a method for monitoring a digital signature is described. The method comprises the steps of: generating a plurality of keypairs *Kₛₜ,* wherein each keypair *Kₛₜ* comprises a one-time signature public key and a one-time signature private key derived by a seed and wherein each keypair *Kₛₜ* is associated with an integer index *st;* generating a binary tree, comprising a root and leaf-nodes, wherein the root of the binary tree corresponds to a master public key and each leaf-node of the binary tree corresponds to one keypair *Kₛₜ,* storing the seed, the master public key and a value of the index *st* in a first processor and multiple nodes of the binary tree in a second processor, receiving a digital signature request; and in response to such request: downloading the seed, the master public key, and the value of the index *st* from the first processor, selecting a keypair *Kₛₜ* associated with the value of the index *st*, computing and storing an authentication path for the selected keypair *Kₛₜ* using the multiple nodes stored in the second processor, wherein the authentication path is a path traversing the nodes of the binary tree, creating a digital signature, deleting at least one node belonging to the authentication path in the second processor, replacing the value of the index *st* with the value of the index *st+1* in the first processor, and verifying the digital signature.

In one embodiment of the first aspect of the present disclosure the step of deleting at least one node belonging to the authentication path in the second processor comprises the step of: deleting at least one leaf-node of the authentication path for the keypair *Kst.*

In one embodiment of the first aspect of the present disclosure the step of deleting at least one node belonging to the authentication path comprises the step of deleting each left node of the authentication path for the keypair *Kₛₜ,* that is not in the authentication path for the keypair *K*_{*st*+1}, replacing such deleted node with its parent node, deleting a right-child node of such parent node and any child-nodes associated with the right-child node.

In one embodiment of the first aspect of the present disclosure the step of verifying the digital signature comprises the step of checking if hashing the authentication path provides the same key as the master public key.

In one embodiment of the first aspect of the present disclosure the multiple nodes of the binary tree stored in the second processor comprise the leaf-nodes of the binary tree.

In one embodiment of the first aspect of the present disclosure the multiple nodes of the binary tree stored in the second processor comprise all the nodes of the binary tree.

In a second aspect of the present disclosure a system for monitoring a digital signature is described. The system comprises: a first processor, a requesting device and a second processor, wherein the first processor is configured to: generate a plurality of keypairs *Kₛₜ,* wherein each keypair comprises a one-time signature public key and a one-time signature private key derived by a seed, and wherein each keypair *Kₛₜ* is associated with an integer index *st;* generate a binary tree comprising a root and leaf-nodes, wherein the root of the binary tree corresponds to a master public key and each leaf-node of the binary tree corresponds to one keypair *Kₛₜ,* calculate an encryption function C having as variables the seed, the master public key and a value of the index *st*; export the binary tree and the encryption function to the second processor, wherein the second processor is configured to: receive a signature request comprising data to be signed from the requesting device, select a keypair *Kₛₜ* associated with the value of the index st, compute an authentication path corresponding to the selected keypair *Kₛₜ* ; send the data to be signed, the authentication path and the encryption function to the first processor; delete at least one node belonging to the authentication path for the selected keypair *Kₛₜ*; wherein the first processor is further configured to: decrypt the encryption function *C*, compute the digital signature using as parameter the decrypted function *C*, and verify the digital signature.

In one embodiment of the second aspect of the present disclosure the first processor verifies the digital signature by checking if it provides the same key as the master public key.

In one embodiment of the second aspect of the present disclosure the second processor executes the step of deleting at least one node belonging to the authentication path by deleting at least one leaf-node from the authentication path for the keypair *Kₛₜ .*

In one embodiment of the second aspect of the present disclosure the second processor is further configured to: delete each left node from the authentication path for the keypair *Kₛₜ* that is not comprised in the authentication path the keypair *K*_{*st+*1}, replace such deleted node with its parent node, delete a right-child node of such parent node and any child-nodes associated with the right-child node.

In one embodiment of the second aspect of the present disclosure requesting device further comprises a user interface

In one embodiment of the second aspect of the present disclosure the first processor is further configured to send a confirmation message to the user interface if the digital signature is verified.

In one embodiment of the second aspect of the present disclosure the first processor is further configured to send a warning message to the user interface if the digital signature is rejected.

In one embodiment of the second aspect of the present disclosure the first processor is a hardware security module.

In one embodiment of the second aspect of the present disclosure the second processor is a database stored in a cloud or in a server external to the first processor.

### DESCRIPTION OF DRAWINGS

Embodiments of the present disclosure will be described in more detail with reference to the appended drawings, in which:
Figure 1 shows a simplified depiction of a binary tree according to a first aspect of the present disclosure.
Figure 2 shows a simplified depiction of an authentication path according to a first aspect of the present disclosure.
Figure 3 shows a flowchart according to a method of the present disclosure.
Figure 4 shows the steps of deleting and replacing nodes according to a method of the present disclosure.
Figure 5 shows a simplified depiction of a system according to a first embodiment of a second aspect of the present disclosure.
Figure 6 shows a simplified depiction of a system according to a second embodiment of a second aspect of the present disclosure.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

### DESCRIPTION OF EMBODIMENTS

Digital signatures are the basis of authentication infrastructures as they allow to sign securely digital certificates. As authentication infrastructures are shifting more and more to resource-constrained devices (like smartphones, microcontrollers... ), there is a need to make digital signatures accessible to such small devices. It is then important to minimize the resource requirements and optimize the efficiency of the involved algorithms (e.g., key generation, signing and verification) without compromising the security of the digital signature.

Hash-based digital signature (HBS) scheme relies on the cryptographic strength of the used hash function and the pseudo-random function family. HBS schemes are not known to be broken by quantum computers. An example of such hash-based signature are the Merkle Signature Scheme (MSS) and the Extended Merkle Signature Scheme (XMSS) which generates multiple aggregated public and private keys by combining a large number of one-time signature (OTS) keypairs into a single binary hash tree structure. Such a strategy for keypairs construction necessitates a precise counter management for tracking the used keys, particularly across multiple invocations of signing algorithm, because using a private key twice will compromise the security of the digital signature scheme.

OTS keypairs are often generated, provided, protected and managed by hardware security modules. In case of parallel hardware security modules, the re-use risk is even larger due to concurrency. Parallel hardware security modules could be loading the same digital signature at the same time. This would mean that one OTS keypair would be used for multiple signatures and security would be compromised.

In the present disclosure a method is proposed for editing the auxiliary data from Merkle Tree in a way that keeps the signing fast and additionally gives a warning if an OTS key is being used concurrently.

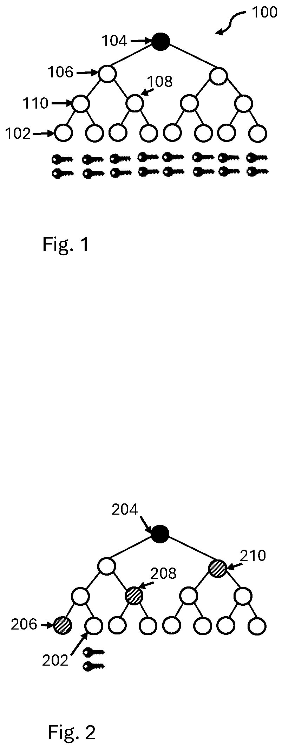

Fig. 1 shows a binary tree according to an aspect of the present disclosure. The binary tree may be a Merkle tree. The binary tree 100 has a height *h=3,* with *h* running from 0 to 3. Each value of the height h corresponds to a level or layer of the binary tree. The binary tree 100 has four levels or layers. The layer *h=0* may be referred to as ground layer or lowest layer of the binary tree. The ground layer of the binary tree has 2*^{h}* = 2³ = 8 nodes. Such nodes may be referred to as leaf-nodes. Each leaf node is associated with a one-time signature keypair *Kₛₜ,* with the index *st* running from 0 to 2*^{h}* - 1 = 7. The black node 104 represents the root node of the binary tree and is associated with the public master key. Each node in the binary tree 100 (represented by the individual circles) consists of an n-byte hash value. The nodes belonging to the layers above the ground layer (i.e. the layers at *h>0*) are constructed by taking pair-wise hashes of the values of the two node pairs in the immediately lower layer together with some predefined additional data. For example, the value of node 106 is equal to the hash of the value of node 108 combined with the value of node 110. In this example, node 106 may be referred to as the parent node of nodes 110 and 108, while node 110 and node 108 may be respectively referred to as the left-child node and the right-child node. The node 110 may be referred to as the sibling node of node 108 and vice versa.

The binary tree 100 may be constructed by initially executing pair-wise hashes on the leaf-nodes of the ground layer to generate each of the nodes in the subsequent layer *h=1.* The nodes in layer *h=1* are then processed in a series of pair-wise hashes to generate the nodes of layer *h=2.* The two nodes of layer *h=2* are combined and hashed to generate the root node 104.

Fig. 2 shows an authentication path (AP) according to an aspect of the present disclosure. The authentication path includes the nodes of the binary tree that must be known in order to calculate the root node based upon the keypair used to sign the message (i.e., the OTS keypair associated with leaf-node 202). The nodes belonging to the authentication path are shown as filled with lines. In the example shown in Fig. 2, the selected OTS keypair for which the authentication path is computed is the keypair for *st=1, K₁.* The selected OTS keypair is associated with the leaf-node 202 at layer h=0 (ground layer). The authentication path starts from the sibling node 206 of the leaf-node 202. The authentication path AP₁ reaches the root node 204 at the top layer of the binary tree by traversing at layer *h*=*1* the node 208 and at layer *h=2* the node 210.

When transmitting a signed message, a signer sends the full signature, which includes the OTS message signature (e.g., generated by executing a digital signature scheme like the modified Wintemitz WOTS+ or any other type of appropriate one-time digital signature scheme on the message) as well as the authentication path. Upon receipt of the full signature, the receiving device (also referred to as verifier) uses the OTS public key to regenerate the same sequence of hashes as the signer. This is done by applying a hash in order to calculate the leaf-node corresponding to the associated OTS public key (in this example, the leaf-node 202). Then the verifier hashes the authentication path provided by the signer to check if the authentication path received with the full signature provides the same key (root value) as the master public key when starting from the calculated leaf-node. If this is the case, i.e. if the calculated root value matches the master public key, then the digital signature is accepted, otherwise it is rejected. An accepted digital signature may be also referred to as valid digital signature.

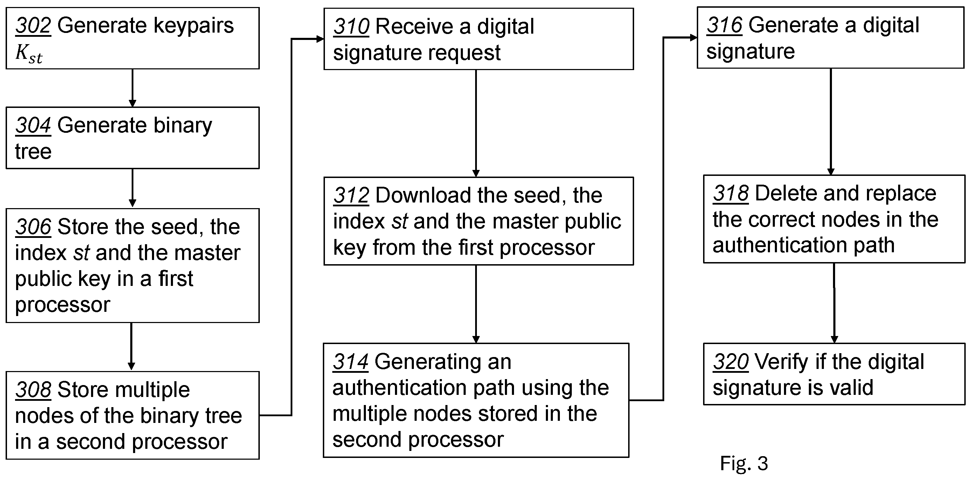

Fig. 3 shows a flowchart depicting a method for monitoring a digital signature according to the present disclosure. In a first step (302) a plurality of keypairs *Kₛₜ* is generated. The index *st* is an integer index running from zero to *n,* where *n* is an integer representing the number of keypairs generated. The keypairs may be generated according to the WOTS+ scheme. Each keypair includes a one-time-signature (OTS) public key and a one-time signature (OTS) private key. The one-time signature private key may be generated by pseudorandom number generator. The pseudorandom number generator is initialized by a random seed, often called seed. The seed may be a number or vector. In a second step (304) a binary tree is generated according to the method explained for Fig. 1. The binary tree may be a Merkle tree. Each leaf node of the binary tree is associated with an OTS public key of the keypair *Kₛₜ.* The root of the binary tree consists of one node which is called root node. The root node is associated with a master public key. In a third step (306) of the method the seed, the current value of the index *st* and the master public key are stored in a first processor. Because the seed and the master public key are security relevant entities, the first processor is a secure processor. For example, the first processor may be a hardware security module (HSM). In a fourth step (308), multiple nodes of the binary tree are stored in a second processor. The second processor may be a database stored in a cloud or server external to the first processor. In one embodiment all the nodes of the binary tree are stored, i.e. the whole binary tree is stored in the second processor. In another embodiment, only the leaf-nodes of the binary tree are stored in the second processor. In this case the remaining nodes needed for computing the authentication path may be derived from the seed.

In a fifth step (310), a digital signature request is received. The digital signature request may include a message with data to be signed. In response to such request, a sixth step (312) is executed. In the sixth step the seed, the current value of the index *st* and the master public key are downloaded from the first processor. In a seventh step (314), a one-time-signature public key associated with the current value of *st* is selected and an authentication path *APₛₜ* for the selected OTS public key is then computed. As each OTS public key of a keypair *Kₛₜ* is associated with a leaf-node *leafₛₜ* of the binary trees, the authentication path *APₛₜ* starts from the sibling node of the leaf-node *leafₛₜ* associated with the selected OTS public key, and it reaches the root node of the binary subtree. The authentication path may traverse several nodes of the binary subtree, if the binary subtree has more layers than just the top layer and the ground layer. The root node of the binary subtree may be seen as an arrival target of the authentication path APₛₜ but it is not part of the authentication path itself as it may be inferred from its child-nodes. The calculated authentication path APₛₜ may be stored in the second processor. In an eighth step (316), a digital signature *sig* is created. The digital signature *sig* will include an OTS digital signature calculated according to a digital signature scheme and an authentication path. The digital signature scheme may be a modified Wintemitz OTS scheme (WOTS+). The OTS private key is used to sign the message, generating an OTS message signature σ*ₛₜ*. The final digital signature *sig* may be computed as $sig = \left({σ}_{st}, {AP}_{st}, st\right)$ Eq. 1

In a ninth step (318), some nodes are deleted from the authentication path stored in the second processor. It should be noted that the nodes are deleted from the authentication path in the second processor but not from the authentication path sent with the digital signature *sig.* In a first embodiment, the first node (i.e. the leaf-node) of the authentication path *APₛₜ* may be deleted. Optionally the deleted leaf-node may be replaced by its parent node. Optionally any node in *APₛₜ* that is a left-child node and that it is no longer in the authentication path for *AP*_{*st*+1} may be deleted and replaced by its parent node. In this case, the right-child node of the parent node and all (possible) child nodes of such right-child node are deleted as well. In a tenth step (320) the digital signature is verified. The step of verifying a digital signature includes the step to check the validity of a digital signature. A digital signature is valid if it provides the same key as the master public key. This is checked by computing the OTS public key from the signature *sig* and then pairwise and consecutively hashing the computed OTS public key with the nodes of the authentication path *APₛₜ* in *sig* to get a candidate public master key. This candidate public master key is then compared with the master key of the binary tree: if they are the same (i.e. if they coincide), then the signature is valid. Deleting nodes from authentication paths of past digital signatures has the effect of protecting against re-use of OTS keypair because it is not possible to recompute a correct past authentication path, as at least one node needed to calculate the authentication path will be missing. If a keypair *Kₛₜ* was used twice (for example by two digital signature devices running in parallel) then only one would have the correct authentication path *APₛₜ* and will be accepted. The other keypair will then be rejected. A re-use of the keypair *Kₛₜ* could then be avoided.

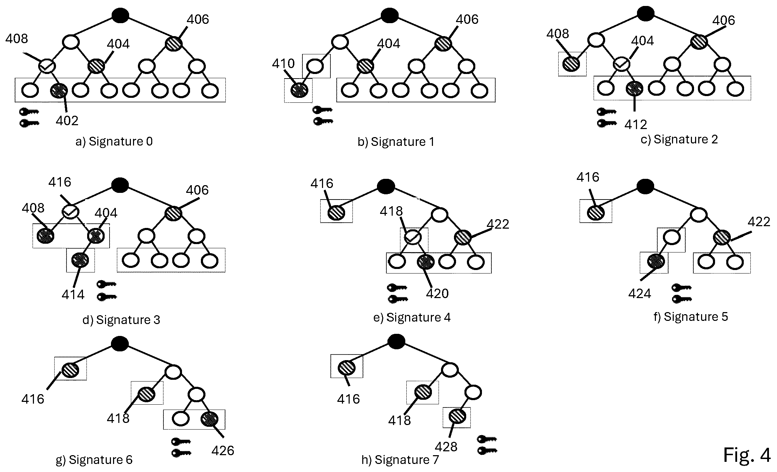

Fig. 4 shows the steps of deleting and replacing nodes for different values of the index *st* according to a first embodiment of the present disclosure. Note that Fig. 4 refers to the embodiment in which only the leaf-nodes, or at least not all the nodes, have been stored in the second processor. In the embodiment in which all the nodes of the binary tree have been stored in the second processor the deleting steps will be executed and the replacing steps will be skipped. A binary tree such as the one described in Fig. 1 is used. The binary tree has a height h=3 and 2*^{h}* = 2³ = 8 leaf-nodes. Each leaf node is associated with the public key of a keypair *Kₛₜ,* with the index *st* running from 0 to 2*^{h}* - 1 = 7. The nodes closed in the light box represents the nodes stored in the second processor. The nodes belonging to an authentication path are represented as filled nodes with lines. Nodes that will be deleted from the second processor are represented as filled with a cross. Nodes that will be added to the second processor are represented as filled with a tick. The signing method started when the first digital signature request is received. In response to such request, a keypair will be chosen. The first keypair to be chosen will be the keypair at *st=0.* At *st=0* the authentication path AP₀ for the first keypair *st=0* is calculated. The authentication path AP₀ includes the leaf-nodes 402 at h=0, the second node 404 at h=1 and the second node 406 at h=2. After AP₀ is calculated, the leaf-node 402 will be deleted from the second storage and replaced with its parent node 408 (the first node at h=1, identified with a tick in step "a) Signature 1" of Fig. 4). The value *st=0* in the first processor is replaced with *st=1.* When a new signature request is received the method continues in step "b) Signature 1" of Fig. 4. The master key, the seed and the value *st=1* are downloaded from the first processor. The keypair *K₁* associated with the index *st=1* is retrieved and AP₁ is calculated as shown in the step "b) Signature 1" of Fig. 4. AP₁ includes the nodes 410, 404 and 406. After the calculation of AP₁ the leaf-node 410 will be deleted from the second processor. As its parent node is already stored in the second processor no further replacements are made. The value *st=1* in the first processor is replaced with *st=2.* With a new signature request, the method advances to step "c) Signature 2" of Fig. 4. The master key, the seed and the value st=2 are downloaded from the first processor. The keypair K₂ associated with the index st=2 is retrieved and AP₂ is calculated as shown in the step "c) Signature 2" of Fig. 4. AP₂ includes the nodes 412, 408, 406. After those steps the leaf-node 412 will be deleted from the second processor and its parent node 404 stored in the second processor. The value *st=2* in the first processor is replaced with *st=3.* The method continues with a new signature request as shown in step "d) Signature 3" of Fig. 4. The master key, the seed and the value *st=3* are downloaded from the first processor. The keypair K₃ associated with the index *st=3* is retrieved and AP₃ is calculated as shown in the step "d) Signature 3" of Fig. 4. AP₃ includes the leaf-node 414 at h=0, the first node 408 at h=1 and the second node 406 at h=2. After those steps the leaf-node 414 will be deleted from the second processor together with the first node 408 at h=1, as this is a left node which will not be used in any subsequent AP. The first node at h=1 is then replaced by its parent node 416 (first nodes at h=2) in the second processor. The right-child node 404 of this parent node 416 is deleted from the second processor as well. The value *st=3* in the first processor is replaced with *st=4.* The method continues with a new signature request as shown in step "e) Signature 4" of Fig. 4. The master key, the seed and the value *st=4* are downloaded from the first processor. The keypair K₄ associated with the index st=4 is retrieved and AP₄ is calculated as shown in the step "e) Signature 4" of Fig. 4. AP₄ includes the leaf-node 420 at h=0, the fourth node 422 at h=1 and the first node 416 at h=2. After those steps the leaf-node 420 will be deleted from the second processor and then replaced by its parent node 418 (third node at h=1) in the second processor. The value *st=4* in the first processor is replaced with *st=5.* The method continues with a new signature request as shown in step "f) Signature 5" of Fig. 4. The master key, the seed and the value *st=5* are downloaded from the first processor. The keypair K₅ associated with the index st=5 is retrieved and AP₅ is calculated as shown in the step "f) Signature 5" of Fig. 4. AP₅ includes the leaf-node 424 at h=0, the fourth node 422 at h=1 and the first node 416 at h=2. After those steps the leaf node 424 will be deleted from the second processor. The value *st=5* in the first processor is replaced with *st=6.* The method continues with a new signature request as shown in step "g) Signature 6" of Fig. 4. The master key, the seed and the value st=6 are downloaded from the first processor. The keypair K₆ associated with the index st=6 is retrieved and AP₆ is calculated as shown in the step "g) Signature 6" of Fig. 4. AP₆ includes the leaf-node 426 at h=0, the second node 418 at h=1 and the first node 416 at h=2. After those steps the leaf-node 426 will be deleted from the second processor. The value st=6 in the first processor is replaced with *st=7* in the first processor. The method continues with a new signature request as shown in step "h) Signature 7" of Fig. 4. The master key, the seed and the value *st=7* are downloaded from the first processor. The keypair K₇ associated with the index st=7 is retrieved and AP₇ is calculated starting from the leaf-node 428 as shown in the step "h) Signature 7" of Fig. 4. By deleting and strategically replacing the node in the second processor, the re-use of an OTS key may be avoided. Additionally, the number of nodes stored in the second processor remains under 2*^{h}* + 1 nodes. This has the effect of lowering the memory requirements for the system. In particular, it is possible to reduce the computational time and to optimize the efficiency of the digital signature generation algorithm. This has the effect of making digital signature accessible to devices with constrained memory or performance capabilities, such as microcontrollers or secure elements.

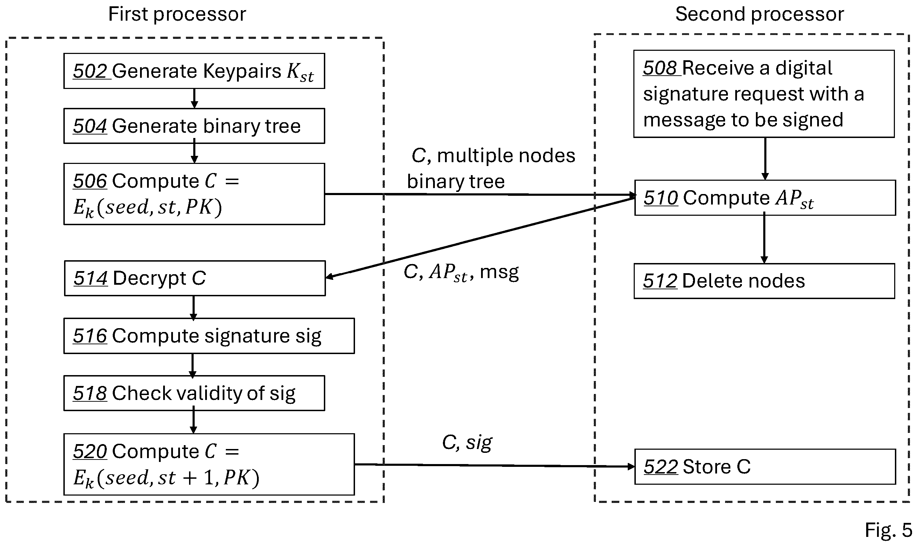

Fig. 5 shows a system according to a second aspect of the present disclosure. The Figure shows on the left side a first processor and on the right side a second processor. The first processor and the second processor may communicate via a communication bus. The first processor may be a hardware secure module (HSM), and the second processor may be a database stored in a cloud or server external to the HSM. The hardware secure module contains one or more secure cryptoprocessor chips to prevent tampering and bus probing, or a combination of chips in a module that is protected by a tamper evident, tamper resistant, or tamper responsive packaging. In the first processor security relevant entities like the seed and the public master key may be stored. The first processor may generate the keypairs Kₛₜ (502) and the binary tree (504). The first processor may compute an encryption function (506) $C = {E}_{k} \left(seed, st, PK\right)$ Eq. 2 where PK is the master public key associated with the root of the binary tree and *Eₖ* represents an encryption method. The first processor then sends the encryption function *C* and multiple nodes of the binary tree to a second processor. In one embodiment of the present disclosure all the nodes of the binary tree may be sent. In yet another embodiment of the present disclosure the multiple nodes sent may be the leaf-nodes of the binary tree. By sending the security relevant data (the seed and the master public key) in an encrypted form the security of the system is ensured. In addition, by not storing the multiple nodes or the whole binary tree in the encryption function *C*, the amount of data transferred when a keypair is loaded is reduced. The second processor may be further configured to receive a digital signal request including a message to be signed form a digital signal request unit (508). Upon receiving a digital signature request including a message *msg,* the second processor may compute an authentication path AP associated with the index *st* (510). The second processor then may send the message *msg,* the encryption function *C* and the authentication path APₛₜ to the HSM. After this step the second processor may delete and eventually replace the stored nodes (512) following the method explained in Fig. 4. The first processor may decrypt the encryption function *C* (514) and may retrieve the seed, the master public key and the value *st.* The first processor then may compute the digital signature (516) for the message *msg* according to Eq. 1. The first processor then may increment the index *st* to its next value *st*+*1*. The first processor may check the validity of the digital signature by hashing the authentication path APₛₜ provided by the second processor. If hashing APₛₜ provides the same key as the master public key PK, then the validity of the digital signature is confirmed (518). If the digital signature is valid then the first process computes a new value of *C* according to the following equation (520) $C = {E}_{k} \left(seed,st+1,PK\right)$ Eq. 3 and sends it back to the second processor. The second processor store the encryption function *C*. When the second processor receives a new digital second request, then the steps above may be executed again with the encryption function C according to Eq. 3.

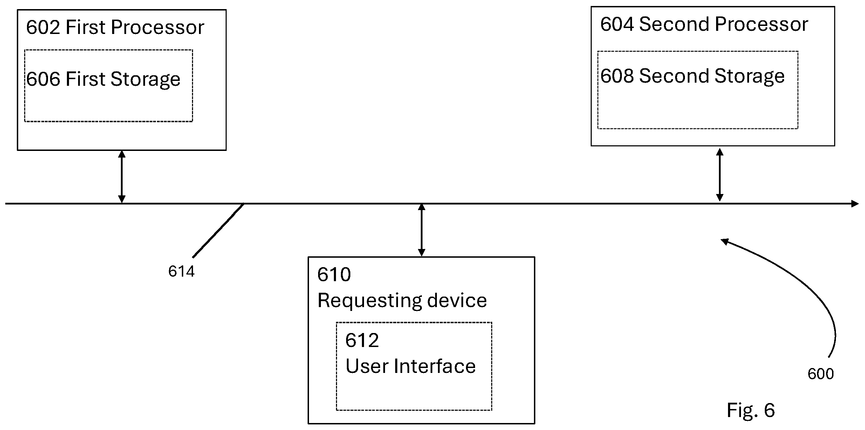

Fig. 6 shows a simplified view of a processing system according to another embodiment of the second aspect of the present disclosure. The processing system 600 may include a first processor 602 and a second processor 604. The first processor may include a first storage 606 and the second processor may include a second storage 608. The first processor and the second processor may be configured to execute the steps explained in Fig. 5. The first processor may include one or more of any type of processing element, a processor core, microprocessor, microcontroller, field-programmable gate arrays (FPGAs), application-specific integrated circuits (ASICs), digital signal processor, and the like.

The first storage 606 and the second storage 608 may include the memory instructions. The second storage 608 may be used for storing the leaf-nodes or the whole binary tree. The first storage 606 may be used for storing the master public key, the seed and the current value of the index *st.*

The requesting device 610 allows a user to request a digital signature. The request device may include a user interface 612.

User interface 612 allows a user to communicate with the processing system 600. The user interface may be connected to one or more devices for enabling communication with a user such as an administrator. For example, user interface 612 may be enabled for coupling to a display, a mouse, a keyboard, or other input/output device. User interface 612 may also include a network interface having one or more devices for enabling communication with other hardware devices external to the processing system 600. The user interface may be used by a user for entering the message to be signed. The user interface may further be configured to receive from the first processor a confirmation message, when a digital signature is verified. The user interface may further be configured to receive a warning signal or warning message form the first processor in case that a re-use of an OTS signature is detected, i.e. the digital signature is not verified. The user interface may output the warning signal and the confirmation signal as acoustic signal (for example via a sound emitted by the user interface) and/or a visual signal (for example via an information box on the display of the user interface) and/or a tactile signal (for example via a vibration of the user interface).

The processing system 600 further includes at least one communication bus represented as arrow 614 in Fig. 6. Such communication bus(es) may be a conventional communication bus(es) having a plurality of conductors for communicating address, data, and control information.

The first processor 602, the second processor 604 and the requesting device 610 may be bi-directionally connected to the communication bus 614. This allows for exchange of information among all the components of the processing system 600.

From reading the present disclosure, other variations and modifications will be apparent to the skilled person. Such variations and modifications may involve equivalent and other features which are already known in the art of semiconductor device processing, and which may be used instead of, or in addition to, features already described herein.

Although the appended claims are directed to particular combinations of features, it should be understood that the scope of the disclosure of the present specification also includes any novel feature or any novel combination of features disclosed herein either explicitly or implicitly or any generalization thereof, whether or not it relates to the same specification as presently claimed in any claim and whether or not it mitigates any or all of the same technical problems as does the present specification

The present disclosure refers to elements or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness, it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims. Furthermore, the word "may" be used in a permissive sense (i.e., meaning having the potential to), rather than the mandatory sense (i.e., meaning must). Similarly, the words "include," "including," and "includes" mean including, but not limited to. Unless stated otherwise, terms such as "first" and "second" are used to arbitrarily distinguish between the elements such terms describe. Thus, these terms are not necessarily intended to indicate temporal or other prioritization of such elements.

## Claims

1. A method for monitoring a digital signature, the method comprising the steps of:
generating a plurality of keypairs *Kₛₜ,* wherein each keypair *Kₛₜ* comprises a one-time signature public key and a one-time signature private key derived by a seed and wherein each keypair *Kₛₜ* is associated with an integer index *st;*
generating a binary tree, comprising a root and leaf-nodes, wherein the root of the binary tree corresponds to a master public key and each leaf-node of the binary tree corresponds to a keypair *Kₛₜ*;
storing the seed, the master public key and a value of the index *st* in a first processor and multiple nodes of the binary tree in a second processor;
receiving a digital signature request; and
in response to receiving the digital signature request: downloading each of the seed, the master public key, and the value of the index *st* from the first processor;
selecting the keypair *Kₛₜ* associated with the value of the index *st;*
computing and storing in the second processor an authentication path for the keypair *Kₛₜ* by using the multiple nodes stored in the second processor, wherein the authentication path is a path traversing the nodes of the binary tree;
creating a digital signature;
deleting at least one node belonging to the authentication path stored in the second processor;
replacing the value of the index *st* with the value of the index *st+1* in the first processor; and
verifying the digital signature.

2. The method according to claim 1 wherein the step of deleting at least one node belonging to the authentication path stored in the second processor comprises the step of: deleting at least one leaf-node of the authentication path for the keypair *Kₛₜ.*

3. The method of claim 2 further comprising the following steps: deleting each left node of the authentication path for the keypair *Kₛₜ,* that is not in the authentication path for the keypair *K*_{*st+*1}, replacing such deleted node with its parent node, deleting a right-child node of such parent node and any child-nodes associated with the right-child node.

4. The method according to any preceding claim, wherein the step of verifying the digital signature comprises the step of checking if it provides the same key as the master public key.

5. The method according to any preceding wherein the multiple nodes of the binary tree stored in the second processor comprise the leaf-nodes of the binary tree.

6. The method according to any preceding claim wherein the multiple nodes of the binary tree stored in the second processor comprise all the nodes of the binary tree.

7. A system for monitoring a digital signature, the system comprising: a first processor, a requesting device and a second processor,
wherein the first processor is configured to:
generate a plurality of keypairs *Kₛₜ,* wherein each keypair comprises a one-time signature public key and a one-time signature private key derived by a seed, and wherein each keypair *Kₛₜ* is associated with an integer index *st;*
generate a binary tree comprising a root and leaf-nodes, wherein the root of the binary tree corresponds to a master public key and each leaf-node of the binary tree corresponds to a keypair *Kₛₜ*;
calculate an encryption function *C* having as variables the seed, the master public key and a value of the index *st;* and
export the binary tree and the encryption function *C* to the second processor, wherein the second processor is configured to:
receive a signature request comprising data to be signed from the requesting device,
select a keypair *Kₛₜ* associated with the value of the index st,
compute an authentication path corresponding to the keypair *Kₛₜ*;
send the data to be signed, the authentication path and the encryption function *C* to the first processor; and
delete at least one node belonging to the authentication path for the keypair *Kₛₜ*;
wherein the first processor is further configured to:
decrypt the encryption function *C*,
compute the digital signature, and
verify the digital signature.

8. The system according to claim 7 wherein the first processor is configured to verify the digital signature by checking if it provides the same key as the master public key.

9. The system according to claim 7 or claim 8 wherein the second processor is configured to execute the step of deleting at least one node belonging to the authentication path for the keypair *Kₛₜ* by deleting at least one leaf-node from the authentication path for the keypair *Kₛₜ .*

10. The system according to claim 9, wherein the second processor is further configured to: delete each left node from the authentication path for the keypair *Kₛₜ* that is not comprised in the authentication path for the keypair *K*_{*st+*1}, replace such deleted node with its parent node, delete a right-child node of such parent node and any child-nodes associated with the right-child node.

11. The system according to any of claims 7 to 10, wherein the first processor is a hardware security module.

12. The system according to any of claims 7 to 10, wherein the second processor is a database stored in a cloud or in a server external to the first processor.

13. The system according to any of claims 7 to 12 wherein the requesting device further comprises a user interface.

14. The system according to claim 13, wherein the first processor is further configured to send a confirmation message to the user interface if the digital signature is verified.

15. The system according to claim 13, wherein the first processor is further configured to send a warning message to the user interface if the digital signature is not verified.
